# EUROPEAN PATENT SPECIFICATION

(11) **EP 3 945 961 B1**
(45) Date of publication and mention of the grant of the patent: **25.01.2023**
(21) Application number: 20707076.4
(22) Date of filing: 25.02.2020
(51) Int. Cl.: A47J 31/44

(54) **A COFFEE MACHINE COMPRISING AN EXTERNAL WATER TANK**
KAFFEEMASCHINE MIT EXTERNEM WASSERTANK
MACHINE À CAFÉ COMPRENANT UN RÉSERVOIR D'EAU EXTERNE

(30) Priority: 03.04.2019 TR 201905030
(43) Date of publication of application: 09.02.2022
(73) Proprietor: Arçelik Anonim Sirketi, 34445 Istanbul (TR)
(72) Inventor: KARAAGAC, Emre, 34445 ISTANBUL (TR); COKER, Nazli Ecem, 34445 ISTANBUL (TR); ALPTEKIN, Ahmet, 34445 ISTANBUL (TR); AYDOGAN, Egemen, 34445 ISTANBUL (TR); DAGBAGLI, Cansu, 34445 ISTANBUL (TR)
(86) International application number: PCT/EP2020/054813
(87) International publication number: WO 2020/200585

(56) References cited:
- CN-A- 108 065 779
- DE-A1-102004 004 822
- GB-A- 2 455 330

## Description

The present invention relates to a coffee machine comprising a water tank wherein water is stored.

In many coffee machines, water tanks wherein water is stored to be used in the brewing process are used. The water tank can be integrated to the coffee machine or can be provided as an external water tank which can be separated from the coffee machine and which can be easily filled with water by the user. In the state of the art, a handle may be used to facilitate the carrying of the water tank in case the water tank has a volume of one liter or more. If no handle is provided, the user has difficulty to carry the water tank with a large volume and the water tank slipping from the hands of the user may cause accidents. Pocket-shaped handles formed into the water tank decrease the volume of the water tank and disrupt the integrity of the coffee machine in terms of aesthetics. The handles which are positioned as protrusion on the water tank adversely affect the aesthetic appearance. In order to maintain the overall appearance of the coffee machine, solutions which position the handle in the water tank are proposed. However, in these solutions, the user may not notice the handle or the hand of the user may contact the water while the water tank is full.

In the state of the art, United States Patent Application No. US8915177, a handle is disclosed, which is positioned in the horizontal plane to be hidden while not in use.

In the state of the art, European Patent Application No. EP2571404, a handle is disclosed, which shifts to the active position from the passive position upon being triggered by the user.

In the state of the art, German Patent Application No. DE102004004822A1 discloses a coffee maker comprising a water tank. The water tank includes a handle on the edge of a lid which is attached to the water tank for opening and closing the water tank.

The aim of the present invention is the realization of a coffee machine wherein the handle of the water tank can be easily noticed by the user and can be conveniently gripped by the user.

The coffee machine realized in order to attain the aim of the present invention, explicated in the first claim and the respective claims thereof, comprises a handle which is disposed in a water tank wherein the water used for brewing coffee is stored, which has a passive position wherein the handle is concealed and an active position wherein the handle can be gripped by the user, and which shifts to the active position from the passive position upon being triggered by the lid of the water tank. When the lid is opened by the user, the handle is triggered by the lid and shifts to the active position from the passive position so as to enable the user to easily carry the water tank.

A tab is provided on the lid, and the tab contacts the handle while the lid is being opened so as to enable the handle to shift to the active position from the passive position. Thus, user satisfaction is increased by a simple solution without requiring any high-cost solutions.

In another embodiment of the present invention, the tab is L-shaped and supports the handle in the passive position when the lid is closed. Thus, the need for using additional protrusions in the water tank to keep the handle in the passive position is eliminated.

In different embodiments of the present invention, the tab is positioned at the corner or sides of the lid. By positioning the tab at the corner, the user is allowed to hold the handle at any desired point thereof, and by positioning the tab at the side, in other words almost at the center of the side of the lid, the problem of causing imbalance while the handle shifts from the passive position to the active position is prevented.

In another embodiment of the present invention, the portions of the tab contacting the handle are rounded. Thus, a smooth movement is provided for the handle, and emergence of any problems in long-term uses is prevented.

In an unclaimed embodiment of the present disclosure, the handle is positioned on guides provided in the water tank and slides over the guides to be concealed and to be shifted to the usable position. By means of a spring disposed in the guide, the handle is pushed upwards so as to be shifted to the usable position. When the lid of the water tank is opened, the spring pushes the handle so as to shift to the usable position and when the lid is closed, the spring is compressed and the handle is concealed.

By means of the coffee machine of the present invention, the handle is concealed in the water tank and a satisfactory overall appearance is provided for the coffee machine in terms of aesthetics while the user is enabled to notice the handle and use the handle without getting his/her hand wet by means of the lid triggering the handle to shift to the usable active position.

The coffee machine realized to attain the aim of the present invention is illustrated in the attached figures, where:

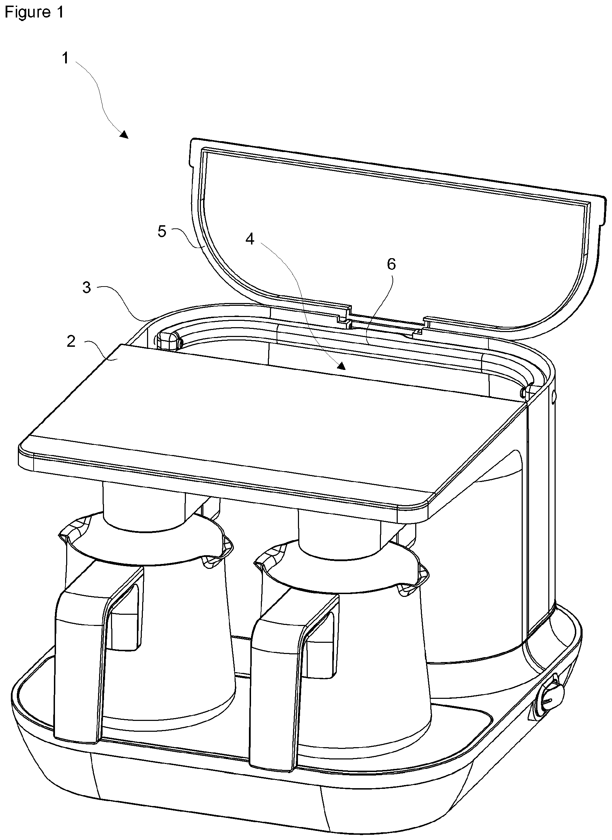

Figure 1 - is the perspective view of a coffee machine.

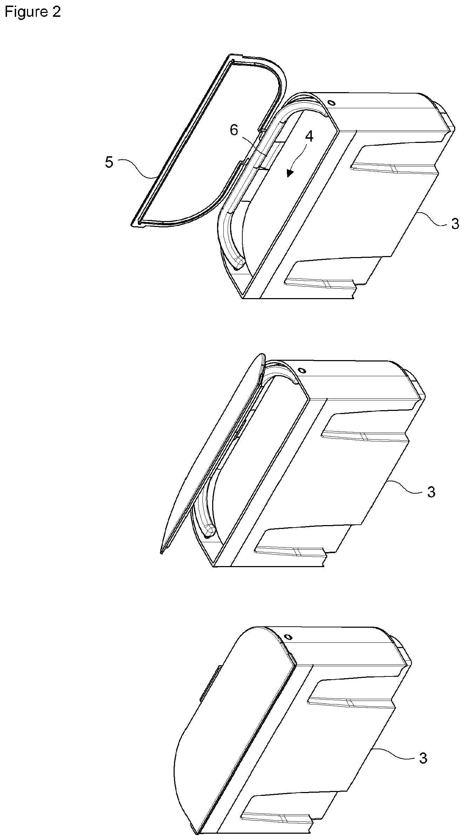

Figure 2 - is the perspective view of the water tank in an embodiment of the present invention.

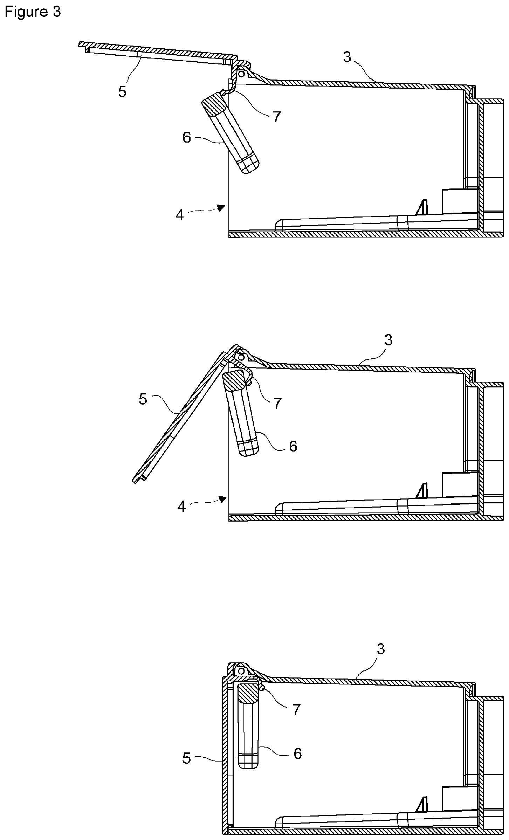

Figure 3 - is the sideways cross-sectional view of the water tank in an embodiment of the present invention.

The elements illustrated in the figures are numbered as follows:
1. Coffee machine
2. Body
3. Water tank
4. Inlet opening
5. Lid
6. Handle
7. Tab

The coffee machine (1) comprises a body (2), and a water tank (3) which is disposed in the body (2), wherein the water to be used in the brewing process is stored and which has an inlet opening (4) for filling in the water and a lid (5) closing the inlet opening (4). The user can open the lid (5) of the water tank (3) and fill the water tank (3) through the inlet opening (4). The water tank (3) can be filled with preferably 1-2 liters of water.

The coffee machine (1) of the present invention comprises a handle (6) which is disposed in the water tank (3), which has a passive position wherein the handle (6) is concealed in the water tank (3) and an active position wherein the handle (6) is moved outwards from the water tank (3) so as to be gripped by the user, and which shifts to the active position from the passive position upon being triggered when the lid (5) is opened. The water tank (3) looks like a closed box when the lid (5) is closed, and the handle (6) is in the passive position and concealed in the water tank (3). The handle (6) is triggered as the lid (5) is opened and shifts to the active position such that the user can easily grip the handle (6). The active position of the handle (6) is every position where the user can grip the handle (6) without contacting the water in the water tank (3), in other words other than the passive position wherein the handle (6) is concealed. The handle (6) can be triggered as described in the below embodiments or in any other manner.

The coffee machine (1) comprises a tab (7) which is provided on the lid (5) and which contacts the handle (6) while the lid (5) is being opened so as to trigger the handle (6) and enable the same to shift to the active position from the passive position. The tab (7) is preferably positioned at the inner side of the lid (5) and contacts the handle (6) while the lid (5) is being opened and enables the handle (6) to shift to the active position.

In another embodiment of the present invention, the tab (7) is L-shaped so as to support the handle (6) in the passive position. One side of the L-shaped tab (7) extends outwards from the inner surface of the lid (5) and the handle (6) is supported on the other side when the lid (5) is closed. As described above, the tab (7) contacts the handle (6) while the lid (5) is being opened and enables the handle (6) to shift from the passive position to the active position.

In a version of these embodiments, the tab (7) is positioned at the corner of the lid (5), and the tab (7) cannot be seen by the user when the lid (5) is open.

In another version of these embodiments, the tab (7) is positioned at the side of the lid (5). The tab (7) is positioned at the side of the lid (5), preferably almost at the center thereof, and thus the risk of any imbalance while the handle (6) is triggered is eliminated.

In another embodiment of the present invention, the tab (7) has rounded edges. By means of the rounded edges of the tab (7), a continuous movement is provided while the tab (7) contacts the handle (6), and a smooth transition from the passive position to the active position is ensured for the handle (6).

In another unclaimed embodiment of the present disclosure, the coffee machine (1) comprises at least two guides (not shown in the figures) which are oppositely provided on the side walls of the water tank (3); the handle (6) which can move upwards-downwards in the guide; and a spring (not shown in the figures) which is provided in the guide and which pushes the handle (6) while the lid (5) is being opened so as to trigger the handle (6) and enable the same to shift from the passive position to the active position. The handle (6) moves over the guides in the water tank (3) and can shift between the passive position and the active position. The spring is positioned in the guide so as to remain under the handle (6) and continuously pushes the handle (6) to force the same to shift to the active position. Thus, when the lid (5) is opened, the handle (6) immediately shifts from the passive position to the active position. When the lid (5) is closed, the lid (5) presses on the handle (6) and compresses the spring in the guide such that the handle (6) shifts to the passive position.

In the coffee machine (1) of the present invention, by triggering the handle (6) by means of the lid (5) so as to shift to the active position wherein the handle (6) can be easily noticed and gripped by the user when the lid (5) is open, the quality perception of the user is increased and the problems which may occur during the use of the handle (6) are eliminated.

## Claims

1. A coffee machine (1) **comprising** a body (2), a water tank (3) which is disposed in the body (2), wherein the water to be used in the brewing process is stored and which has an inlet opening (4) for filling in the water and a lid (5) closing the inlet opening (4), and a handle (6) which is disposed in the water tank (3), which has a passive position wherein the handle (6) is concealed in the water tank (3) and an active position wherein the handle (6) is moved outwards from the water tank (3) so as to be gripped by the user, and which shifts to the active position from the passive position upon being triggered when the lid (5) is opened, **characterized by** a tab (7) which is provided on the lid (5) and which contacts the handle (6) while the lid (5) is being opened so as to trigger the handle (6) and enable the same to shift to the active position from the passive position.

2. A coffee machine (1) as in Claim 1, **characterized by** the L-shaped tab (7) which supports the handle (6) in the passive position.

3. A coffee machine (1) as in Claim 1 or 2, **characterized by** the tab (7) which is disposed at the corner of the lid (5).

4. A coffee machine (1) as in Claim 1 or 2, **characterized by** the tab (7) which is disposed at the side of the lid (5).

5. A coffee machine (1) as in any one of the preceding claims, **characterized by** the tab (7) which has rounded edges.

## Patentansprüche

1. Eine Kaffeemaschine (1) **umfasst** einen Körper (2), einen im Körper (2) angeordneten Wassertank (3), in dem das beim Brühvorgang zu verwendende Wasser gespeichert wird und der eine Einlassöffnung (4) zum Einfüllen des Wassers und einen diese verschließenden Deckel (5) Einlassöffnung (4) aufweist, und einen Griff (6), der in dem Wassertank (3) angeordnet ist, der eine passive Position hat, wobei der Griff (6) in dem Wassertank (3) verborgen ist und eine aktive Position, in der der Griff (6) von dem Wassertank (3) nach außen bewegt wird, zum Greifen durch den Benutzer, und der sich beim Auslösen beim Öffnen des Deckels (5) von der passiven Position in die aktive Position verschiebt, **gekennzeichnet ist sie durch** eine Lasche (7), die an dem Deckel (5) vorgesehen ist und die den Griff (6) berührt, während der Deckel (5) geöffnet wird, um den Griff (6) auszulösen und es ihm zu ermöglichen, sich in die aktive Position aus der passiven Position zu verschieben.

2. Eine Kaffeemaschine (1), wie in Anspruch 1 aufgeführt, **ist dadurch gekennzeichnet, dass** die L-förmige Lasche (7) den Griff (6) in der passiven Position trägt.

3. Eine Kaffeemaschine (1), wie in Anspruch 1 oder 2 aufgeführt, **ist dadurch gekennzeichnet, dass** die Lasche (7) an der Ecke des Deckels (5) angeordnet ist.

4. Eine Kaffeemaschine (1), wie in Anspruch 1 oder 2 aufgeführt, **ist dadurch gekennzeichnet, dass** die Lasche (7) seitlich an dem Deckel (5) angeordnet ist.

5. Eine Kaffeemaschine (1), wie in einem der vorherigen Ansprüchen aufgeführt, **ist dadurch gekennzeichnet, dass** die Lasche (7) abgerundete Kanten hat.

## Revendications

1. Une machine à café (1) **comprenant** un corps (2), un réservoir d'eau (3) qui est disposé dans le corps (2), dans lequel l'eau à utiliser dans le processus d'infusion est stockée et qui a une ouverture d'entrée (4) pour remplir l'eau et un couvercle (5) fermant l'ouverture d'entrée (4), et une poignée (6) qui est disposée dans le réservoir d'eau (3), qui a une position passive dans laquelle la poignée (6) est cachée dans le réservoir d'eau (3) et une position active dans laquelle la poignée (6) est déplacée vers l'extérieur du réservoir d'eau (3) de manière à être saisie par l'utilisateur, et qui passe de la position passive à la position active en étant déclenché lorsque le couvercle (5) est ouvert, **caractérisé par** une languette (7) qui est prévue sur le couvercle (5) et qui entre en contact avec la poignée (6) pendant que le couvercle (5) est ouvert afin de déclencher la poignée (6) et de permettre à celle-ci de passer de la position passive à la position active.

2. Une machine à café (1) comme dans la déclaration 1, **caractérisée par** la languette en forme de L (7) qui supporte la poignée (6) dans la position passive.

3. Une machine à café (1) comme dans la déclaration 1 ou 2, **caractérisée par** la languette (7) qui est disposée au coin du couvercle (5).

4. Une machine à café (1) comme dans la déclaration 1 ou 2, **caractérisée par** la languette (7) qui est disposée sur le côté du couvercle (5).

5. Une machine à café (1) comme dans l'une quelconque des déclarations précédentes, **caractérisée par** la languette (7) qui a des bords arrondis.
